# EUROPEAN PATENT APPLICATION

(11) **EP 4 527 865 A1**
(43) Date of publication of application: **26.03.2025**
(21) Application number: 24189111.8
(22) Date of filing: 17.07.2024
(51) Int. Cl.: C08F 230/08, C09D 143/04

(54) **SILOXANE-CONTAINING COPOLYMERS AND ARTICLES**

(30) Priority: 20.09.2023 US 202363583940 P
(71) Applicant: 3M Innovative Properties Company, Saint Paul, MN 55133-3427 (US)
(72) Inventor: Coppens, Dirk, 2070 Zwijndrecht (BE); Elsbernd, Cheryl, St. Paul, MN, 55133-3427 (US); Doelen, Leonardus, 41453 Neuss (DE); Riofski, Mark, St. Paul, MN, 55133-3427 (US); Polik, Robert, St. Paul, MN, 55133-3427 (US)
(74) Representative: Vossius & Partner Patentanwälte Rechtsanwälte mbB

(57) **Abstract**

A copolymer is described comprising siloxane polymerized unit and second polymerized unit represented by 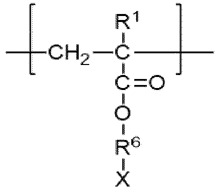 wherein:
each R⁶ is independently methylene, ethylene, or propylene; and
X is independently a functional group selected from epoxy, hydroxyl, or isocyanate group; and
c) optionally other comonomers. Also described is an article comprising a substrate and a copolymer disposed on at least a portion of the substrate.

## Description

### SUMMARY

In one embodiment, a copolymer is described comprising:
a) 50 to 95 weight percent of first polymerized units comprising at least one of:
   a1) 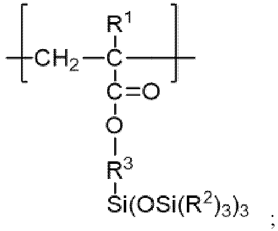 or
   a2) 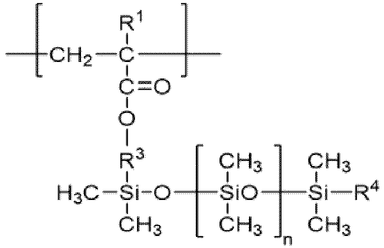
   wherein:
      each R¹ is independently H or methyl;
      each R² is independently methyl or ethyl;
      each R³ is independently methylene, ethylene, or propylene;
      each R⁴ is independently methyl, ethyl, propyl, or butyl;
      each n is independently an integer from 2 to 10; and
b) 5 to 50 weight percent of second polymerized units represented by 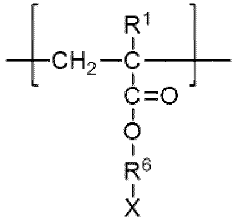 wherein:
   each R⁶ is independently methylene, ethylene, or propylene; and
   X is independently a functional group selected from epoxy, hydroxyl, or isocyanate group; and
c) optionally other comonomers.

In favored embodiments, R¹, R², R³ R⁴, n, and X are selected to provide high oil-repellency. In this embodiment, R¹, R², and R⁴, may be methyl. In this embodiment, R³ may be propylene. In some embodiments, n is typically no greater than 10.

The amount of optional comonomers is typically no greater than 20, 15, 10, 5, or 1 wt.%.

Also described is an article comprising a substrate and a copolymer disposed on at least a portion of the substrate.

### DETAILED DESCRIPTION

The (meth)acrylic copolymer is prepared by copolymerizing at least one ethylenically unsaturated silicon-containing monomer with an ethylenically unsaturated comonomer having a functional group.

In typical embodiments, the ethylenically unsaturated group of the monomers is a (meth)acrylate group, i.e. acrylate or methacrylate. The polymerization of the (meth)acrylate group forms a copolymer having a (meth)acrylic backbone and pendent silicone-containing groups and pendent functional groups.

Silicon-containing (meth)acrylate monomers are commercially available. Examples of commercially available monomers suitable for generating monomer unit a1) include for example 3-[tris(trimethylsiloxy)silyl]propyl methacrylate available from Wacker Chemie Ag as Wacker CLA 30. The monomer 3-[tris(trimethylsiloxy)silyl]propyl methacrylate is also available from Silar Laboratories, Sigma-Aldrich, St. Louis, Missouri and Career Henan Chemical Company, Zhengzhou, China. Examples of commercially available monomers suitable for generating monomer unit a2) include for example mono-methacryloxypropyl-terminated polydimethylsiloxane MCR-M17 (1000 g/mol, available from Gelest, Inc., Morrisville, Pennsylvania); poly(dimethylsiloxane), monomethacrylate-terminated, (available as Cat. No. 798274 from Sigma-Aldrich); X-22-2404 medium chain length, single-end methacrylic-based modified silicone resin (400 g/mol side chain, available from Shin-Etsu Chemical Co., Tokyo, Japan); X-22-174ASX medium chain length, single-end methacrylic-based modified silicone resin (900 g/mol side chain, available from Shin-Etsu Chemical Co.); X-22-174BX medium chain length, single-end methacrylic-based modified silicone resin (2300 g/mol side chain, available from Shin-Etsu Silicones of America, Akron, Ohio); and KF-2012 medium chain length, single-end methacrylic-based modified silicone resin, 4600 g/mol side chain from Shin-Etsu Chemical Co.).

Some representative monomers are depicted as follows:

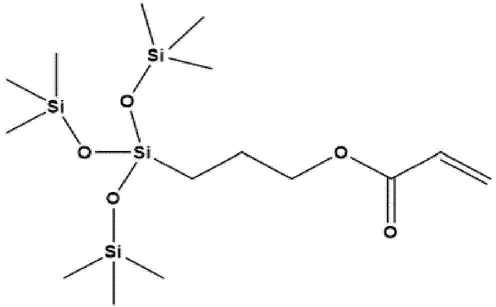

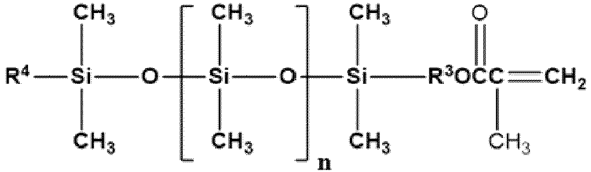

Each n is independently an integer from 2 to 65. In some embodiments, n is independently an integer from 10 to 65. In some embodiments, n is independently an integer from 20 to 65. In some embodiments, n is independently an integer from 30 to 65. In some embodiments, n is independently an integer from 40 to 65. In some embodiments, n is independently an integer from 2 to 50. In some embodiments, n is independently an integer from 5 to 50. In some embodiments, n is independently an integer from 10 to 50. In some embodiments, n is independently an integer from 20 to 50. In some embodiments, n is independently an integer from 15 to 45. In some embodiments, n is independently an integer from 25 to 45. In typical embodiments, monomer units having varying values of n may be present, however this is not a requirement. In some favored embodiments, n is no greater than 10.

In some embodiments, the silicon-containing (meth)acrylate monomers have functional group equivalent weight (or in other words molecular weight per functional group) ranging from 200 to 1000 g/mole. In some embodiments, the functional group equivalent weight is no greater than 900, 800, 700, 600, 500, or 400 g/mole.

In some embodiments, the copolymer comprises monomer units a1. In some embodiments, the copolymer comprises monomer units a2. In other embodiments, the copolymer may comprise monomer units a1 and a2. In this embodiment, the molar ratio ofa1:a2 may range from 1:10 to 10:1.

The total amount of monomer unit a) is typically at least 50, 55, 60, 65, 70, 75, 80, 85, 90 or 95 wt.%, based on the total weight of the copolymer. In some embodiments, the amount of monomer unit a) is no greater than 95, 90, 85, 80, or 75 wt.% based on the total weight of the copolymer.

The copolymer comprises at least one second divalent monomer unit b) represented by 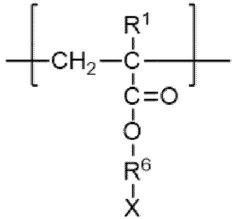 wherein:
each R⁶ is independently methylene, ethylene, or propylene; and
X is a functional group selected from epoxy group, hydroxyl, or isocyanate.

In favored embodiments, wherein the copolymer is a water based dispersion, X is preferably epoxy, such as in the case of glycidyl(meth)acrylate. In this embodiment, at least 50, 60, 70, 80, 90, or 100% of the X groups are epoxy. In this embodiment, less than 50, 40, 30, 20 or 10% of the X groups are other functional groups, such as hydroxy and/or isocyanate.

Comonomers suitable for generating monomer unit b are commercially available and include for example glycidyl(meth)acrylate, 2-hydroxypropyl (meth)acrylate, 2-hydroxy-1-methylethyl (meth)acrylate, hydroxypropyl (meth)acrylate, hydroxybutyl (meth)acrylate, isocyanotoethyl acrylate, isocyanatoethylmethacrylate (IEM), and blocked isocyanates such as 2-[O-[1'-methylpropylideneamino]carboxyamino)ethyl methacrylate and 2-[(3,5 dimethylpyrazolyl) carboxyamino]ethyl (meth)acrylate. In some embodiments, the blocked isocyanate has an unblocking temperature of at least 80, 90, 100, or 110°C. The unblocking temperature of the blocked isocyanate typically has an unblocking temperature less than the drying temperature. In some embodiments, the blocked isocyanate has an unblocking temperature of no greater than 170, 160, 150, 140, 130 or 120°C. When the copolymer is a water-based dispersion, blocked isocyanates are preferred for preventing reaction within the dispersion prior to applying the dispersion to a substrate.

The total amount of monomer unit b) is typically no greater than 50, 45, 40, 35, 30, 25, 20, 15, 10 or 5 wt.%, based on the total weight of the copolymer. In some embodiments, the amount of monomer unit b) is at least 5, 10, 15, 20 or 25 wt.% based on the total weight of the copolymer.

Without intending to be bound by theory, it is surmised that the functional group X (e.g. epoxy) may crosslink with itself or crosslink with other functional groups present in the composition or functional groups present on the substrate.

### Optional Monomers

The copolymer may optionally comprise other monomers. When present the amount of other monomers is typically no greater than 20, 15, or 10 wt.% based on the total weight of the copolymer. In some embodiments, the amount of other monomers is no greater than 10, 9, 8, 7, 6, 5, 4, 3, 2, or 1 wt.% based on the total weight of the copolymer.

In typical embodiments, the optional monomers may be characterized as hydrophobic monomers. However, it is surmised that small concentrations of hydrophilic monomers may also be suitable. For example, hydroxy-functional comonomers described here may be considered hydrophilic monomers.

Examples of hydrophobic monomer include (meth) acrylic acid esters and (meth)acrylamides that comprise a linear or branched alkyl group having 1 to 24 carbon atoms. Specific examples include hydrophobic monomers such as methyl (meth)acrylate, ethyl (meth)acrylate, propyl (meth)acrylate, n-butyl(meth) acrylate, iso-butyl (meth) acrylate, t-butyl (meth)acrylate, hexyl (meth)acrylate, 2-ethylhexyl (meth)acrylate, octyl (meth acrylate, lauryl (meth) acrylate, propyl (meth)acrylamide, butyl (meth)acrylamide, t-butyl (meth)acrylamide, hexyl (meth)acrylate, octyl (meth)acrylamide, and lauryl (meth)acrylamide.

### Method of Making Copolymer

Copolymers according to the present disclosure can be made, for example, by free radical polymerization using well-known techniques. For example, the free-radically polymerizable monomers can be combined, typically in water and/or organic solvent, with a thermally activated free-radical initiator (e.g., a peroxide or azo compound) which is then heated under an inert atmosphere. Alternatively, other techniques may be used such as, for example, ionizing radiation or ultraviolet radiation in combination with an included free-radical photoinitiator (e.g., benzophenone or *α-*cyclohexyl- *α*,*α*-dimethoxyacetophenone).

Examples of suitable thermal initiators include peroxides (e.g., benzoyl peroxide, dibenzoyl peroxide, dilauryl peroxide, cyclohexane peroxide, and methyl ethyl ketone peroxide), hydroperoxides (e.g., butyl hydroperoxide and cumene hydroperoxide), dicyclohexyl peroxydicarbonate, t-butyl perbenzoate, and azo compounds such as 2,2-azo-bis(isobutyronitrile) (AIBN), and combinations thereof. Examples of commercially available thermal initiators include initiators available under the "VAZO" trade designation from The Chemours Company (Wilmington, Delaware) such as VAZO 64 (2,2'-azobis(isobutyronitrile)), VAZO 52, VAZO 65 and VAZO 68 and initiators available under the "CELOGEN" trade designation from CelChem LLC, Naples, Florida. Peroxides are available from a variety of sources.

A free-radical polymerization initiator is used in an amount effective to cause free-radical polymerization of the free-radically polymerizable monomers. The amount will typically vary depending upon, for example, the type of initiator, the molecular weight of the initiator, the intended application of the copolymer composition, and polymerization process factors such as temperature. The free radical initiator can be used in any amount effective to facilitate polymerization of the monomers (e.g., 0.1 part by weight to about 5 parts by weight, 0.2 part by weight to about 2 parts by weight, or about 0.1 part by weight to about 1 part by weight, per hundred parts by weight of the total amount of monomers.

If it is desired to control the molecular weight distribution of the copolymer, a free-radical polymerization chain transfer agent may be added to the combined monomers before polymerization. Examples of useful chain transfer agents include but are not limited to those selected from the group consisting of carbon tetrabromide, alcohols, mercaptans, and mixtures thereof. Some preferred examples include thioglycerol, isooctyl mercaptoacetate, tert-dodecyl mercaptan, tert-nonyl mercaptan, n-octyl mercaptan, 1,8-dimercapto-3,6-dioxaoctane (DMDO), isooctyl 3-mercaptopropionate,

If present, the chain transfer agent(s) are typically present in an amount of up to about 1 part by weight of a chain transfer agent, typically about 0.01 to about 0.5 parts by weight, if used, preferably about 0.05 parts by weight to about 0.2 parts by weight, based upon 100 parts by weight of the combined monomers present.

The copolymers described herein may be characterized as a random copolymer.

Copolymers according to the present disclosure can be dispersed and/or dissolved in a liquid vehicle to facilitate application to a substrate. Suitable liquid vehicles may include water, organic solvents (e.g., ethers, esters, alcohols, ketones, chlorinated hydrocarbons, and/or hydrocarbons). In some embodiments (e.g., those involving aerosol dispensers) liquified and/or compressed gases may be combined with the copolymers.

In some cases, the copolymers may be synthesized in organic solvents, and subsequently emulsified into an aqueous dispersion. A dispersion will generally contain water, an amount of composition effective to provide repellent properties to a substrate treated therewith, and a surfactant(s) in an amount effective to stabilize the dispersion. Conventional cationic, nonionic, anionic surfactants or mixtures thereof are suitable.

The non-fluorinated water-repellent treatment comprising the copolymer as described herein may optionally contain one or more additional components such as, for example, antioxidant, ultraviolet (UV) light stabilizer, or optical brightener.

Copolymers according to the present disclosure can provide a degree of oil-repellency to a substrate (i.e., a solid substrate).

The substrate may comprise an organic material, an inorganic material, or a combination thereof. In some embodiments, the substrate comprises a porous surface including paper, woven and nonwoven fabrics, natural and synthetic leather or suede; and hard surface including concrete and natural and synthetic wood and stone.

Copolymers described herein comprise monomers having cure sites (i.e. X of divalent unit b). By the term "cure site" is meant a functional group that is capable of engaging in a reaction such that it can be bound to a substrate to be treated to impart durability of certain properties.

In many embodiments, the non-fluorinated oil-repellent treatment may be applied to the substrate while carried in a liquid vehicle that evaporates after application (e.g., by spraying, dipping, or prolonged soaking). After application of the treatment solution, the substrates may be dried in an oven for up to several minutes at any suitable temperature, often in the range of 100°C to 200°C.

The water and oil repellency were evaluated according to the test methods described in the examples. Notably, cured 3-(methacryloyloxy)propyltris(trimethylsiloxy)silane (C1 of the examples) has high (85-100) initial water repellency on fabrics including polyester fabric, polyamide fabric, and polyester cotton fabric. Similarly, cured X-22-2404 (C2 of the examples) also has high (70-100) initial water repellency on fabrics including PES is polyester fabric, PA is polyamide fabric, and PES/Co is polyester cotton fabric. However, both C1 and C2 exhibit no water repellency after washing and drying. C1 and C2 also have good (i.e. grade of A or B) initial oil repellency to oils including mineral oil and olive oil.

The copolymer described herein, further comprising polymerized units b) having a functional group, provides comparable or better initial water repellency. The initial water repellency on fabrics including polyester fabric, polyamide fabric, and polyester cotton fabric is at least 70, 80, 90, or 100. The inclusion of polymerized units b) having a functional group improves the water repellency after washing and drying. The water repellency after washing and drying on fabrics including polyester fabric, polyamide fabric, and polyester cotton fabric can be at least 50, 60, 70, 80, 90, or 100. The copolymer described herein, further comprising polymerized units b) having a functional group, also exhibit good (i.e. grade of A or B) initial oil repellency.

Objects and advantages of this disclosure are further illustrated by the following non-limiting examples, but the particular materials and amounts thereof recited in these examples, as well as other conditions and details, should not be construed to unduly limit this disclosure.

### EXAMPLES

Unless otherwise noted or readily apparent from the context, all parts, percentages, ratios, etc. in the Examples and the rest of the specification are by weight. Table 1, below, describes material used in the Examples.

| ABBREVIATION | DESCRIPTION AND SOURCE |
|---|---|
| TRIS-M | 3-(methacryloyloxy)propyltris(trimethylsiloxy) silane, obtained from Wacker Chemie Ag as Wacker CLA 30 |
| Silicon-containing monomer | |
| 2404 | Single-end type, methacryl-modified, reactive silicone fluid having a functional group equivalent weight of 420 g/mol, obtained as product grade X-22-2404 from Shin-Etsu Chemical Co., Tokyo, Japan |
| Silicon-containing monomer | |
| GMA Comonomer with | Glycidyl methacrylate |
| functional group | |
| HOEA Comonomer with functional group | Hydroxyethylacrylate |
| HOEMA Comonomer with functional group | Hydroxyethylmethacrylate |
| ODA Hydrophobic comonomer | Octadecyl acrylate |
| ODMA Hydrophobic comonomer | Octadecyl methacrylate |
| X-22-174ASX Silicon-containing monomer | Shin-Etsu Silicone X-22-174ASX |
| KF-2012 Silicon-containing monomer | Shin-Etsu Silicone KF-2012 |
| X-22-2426 Silicon-containing monomer | Shin-Etsu Silicone X-22-2426 |
| CHPMA Comonomer with functional group | 3-Chloro-2-hydroxypropyl methacrylate |
| Karenz^{™} AOI-BP (blocked-NCO group) | 2- [(3,5-dimethylpyrazolyl)carboxyamino]ethyl acrylate |
| Karenz^{™} MOI-BP (blocked-NCO group) | 2- [(3,5-dimethylpyrazolyl)carboxyamino] ethyl methacrylate |
| Karenz^{™} MOI-BM (blocked-NCO group) | 2-[O-[1'-Methylpropylideneamino]carboayamino)ethyl methacrylate |

### TEST METHODS

### Oil Repellency

The initial oil repellency was evaluated according to the American Association of Textile Chemists and Colorists (AATCC) TM118-2013e2, Test Method for Oil Repellency: Hydrocarbon Resistance using Test Oil 1 (i.e. Mineral Oil and Olive Oil). As specified in the test method, the oil repellency is graded according to the following criteria.
A = Passes; clear well-rounded drop.
B = Borderline passes, rounding drop with partial darkening.
Fail - Wicking apparent and/or complete wetting

### Water Repellency

The water repellency was measured by AATCC TM 22-2017e, Test Method for Water Repellency: Spray and is expressed in terms of a `spray rating' of the tested fibrous substrate. The spray rating of a treated fibrous substrate is a value indicative of the dynamic repellency of the treated substrate to water that impinges on the treated substrate (PES is polyester fabric, PA is polyamide fabric, PES/Co is polyester cotton fabric). The spray rating (SR) was obtained by spraying 250 milliliters (mL) water on the substrate from a height of 15 centimeters (cm). The wetting pattern is visually rated using a 0 to 100 scale, as specified in the test method, where 0 means complete wetting and 100 means no wetting at all. Spray rating was measured initially (IN SR) and after the fibrous substrate was laundered 10 times.

### Laundering

The laundering procedure consisted of placing a 400 - 900 cm² sheet of treated fibrous substrate in a washing machine (Miele Novotronic T490) along with ballast sample (1.9 killogram (kg) of 8-ounce fabric). A commercial detergent ("Sapton," available from Henkel, Germany, 60 grams (g)) was added. The fibrous substrate and ballast load were washed using a short wash cycle at 40°C, followed by a rinse cycle and centrifuging. The sample was not dried between repeat cycles. After the 10 washing cycles the samples were dried in a Miele T-356 tumble drier, setting Extra dry'. The samples were conditioned overnight at room temperature before the spray rating was tested. The results of spray rating are indicated as SR 10LD TD respectively.

### Treatment Procedure via Padding Process: Water-based Dispersions

Before application to the fibrous substrates (e.g., textile or fabric substrates), the 30% polymer dispersions were diluted with DI-water to obtain treatment dispersions having a concentration of 33g/liter active material leading to 1% solids on fibrous substrate. The treatments were applied onto the fibrous substrates, by immersing the substrates in the treatment dispersion and agitating until the substrate was saturated. The saturated fibrous substrate was then run through a padder/roller to remove excess of the dispersion and to obtain a certain Percent (%) Wet Pick Up (WPU) (100% WPU means that after this process the substrate absorbed 100% of its own weight of the treatment dispersion before drying). After application of the treatment dispersion, the treated substrates were dried and cured for 3 minutes at 155°C unless otherwise indicated. The dried samples were conditioned overnight at room temperature before testing.

### General procedure for synthesis of polymer dispersions

A mixture of 2,66g Ethoquad C-12, 3g Tergitol 15-S-30, 6 g Tergitol TMN-6, 256g water and 100g of monomers were mixed in a glass beaker, and heated to 40°C. This mixture was ultrasoned for 4 minutes at maximum setting with a Branson sonifier, resulting in a monomer dispersion.

The monomer dipsersion was transferred to a 3 necked round bottom flask, equipped with a cooler, stirrer, and temperature control. To the resulting monomer dispersion 0,25g V-50 initiator was added, then the flask was purged with nitrogen and then reacted for 16 hours at 70°C. This resulted in a good quality water-based polymer dispersion containing 30% solids.

| **Ex.** | **CLA 30** | **2404** | **GMA** | **HOEMA** | **HOEA** | **ODMA** | **ODA** |
|---|---|---|---|---|---|---|---|
| C1 | 100 | | | | | | |
| 1 | 97.5 | | 2.5 | | | | |
| 2 | 95 | | 5 | | | | |
| 3 | 92.5 | | 7.5 | | | | |
| 4 | 90 | | 10 | | | | |
| 5 | 85 | | 15 | | | | |
| 6 | 80 | | 20 | | | | |
| 7 | 75 | | 25 | | | | |
| 8 | 70 | | 30 | | | | |
| 9 | 60 | | 40 | | | | |
| 10 | 50 | | 50 | | | | |
| 11 | 40 | | 60 | | | | |
| C2 | | 100 | | | | | |
| 12 | | 95 | 5 | | | | |
| 13 | | 90 | 10 | | | | |
| 14 | | 80 | 20 | | | | |
| 15 | | 70 | 30 | | | | |
| 16 | | 60 | 40 | | | | |
| 17 | 90 | | 5 | 5 | | | |
| 18 | 75 | | | | | 25 | |
| 19 | 50 | | | | | 50 | |
| 20 | 75 | | | | | | 25 |
| 21 | 50 | | | | | | 50 |
| 22 | 95 | | | | 5 | | |
| 23 | 95 | | | 5 | | | |
| 24 | 90 | | | 10 | | | |
| 25 | 90 | | | 10 (1*) | | | |
| 26 | 95 | | | 5 (2 *) | | | |
| 27 | 95 | | | 5 (3 *) | | | |
| 28 | 95 | | | 5 (4*) | | | |

| | | | | | | | |
|---|---|---|---|---|---|---|---|
| 1* - contains CHPMA in place of HOEMA 2* - contains Karenz AOI-BP in place of HOEMA 3* - contains Karenz MOI-BP in place of HOEMA 4* - contains Karenz MOI-BM in place of HOEMA | | | | | | | |

**Table 2 - Test Results**

| **Ex.** | **PES IN** | **PA IN** | **PES/Co IN** | **PES** | **PA 10LD** | **PES/co** | **Initial Mineral Oil** | **Initial Olive Oil** |
|---|---|---|---|---|---|---|---|---|
| | **SR** | **SR** | **SR** | **SR 10LD TD** | **SR 10LDTD** | **SR 10LDTD** | | |
| C1 | 85 | 100 | 85 | 0 | 0 | 0 | A | A |
| 1 | 95 | 100 | 95 | 50 | 0 | 0 | A | A |
| 2 | 95 | 100 | 95 | 75 | 0 | 0 | A | A |
| 3 | 95 | 100 | 95 | 90 | 50 | 50 | A | A |
| 4 | 95 | 95 | 90 | 80 | 50 | 50 | A | A |
| 5 | 90 | 100 | 90 | 90 | 75 | 70 | A | A |
| 6 | 90 | 100 | 90 | 90 | 75 | 70 | A | A |
| 7 | 90 | 100 | 90 | 90 | 75 | 70 | A | A |
| 8 | 85 | 100 | 95 | 90 | 80 | 70 | A | A |
| 9 | 80 | 100 | 90 | 90 | 80 | 70 | B | B |
| 10 | 80 | 100 | 90 | 85 | 85 | 70 | B | B |
| 11 | 75 | 100 | 80 | 80 | 85 | 70 | B | B |
| C2 | 70 | 100 | 90 | 0 | 0 | 0 | A | A |
| 12 | 90 | 100 | 95 | 60 | 50 | 50 | A | A |
| 13 | 90 | 100 | 100 | 85 | 60 | 70 | A | A |
| 14 | 90 | 100 | 100 | 90 | 80 | 70 | A | A |
| 15 | 90 | 100 | 90 | 90 | 80 | 70 | B | B |
| 16 | 80 | 100 | 90 | 80 | 80 | 70 | B | B |
| 17 | 85 | 95 | 85 | 75 | 0 | 50 | B | A |
| 18 | 80 | 90 | 75 | 50 | 0 | 0 | B | B |
| 19 | 80 | 75 | 70 | 50 | 0 | 0 | Fail | Fail |
| 20 | 80 | 95 | 80 | 50 | 0 | 0 | B | B |
| 21 | 80 | 80 | 70 | 70 | 0 | 0 | Fail | Fail |
| 22 | 85 | 100 | 85 | 50 | 0 | 0 | A | A |
| 23 | 85 | 100 | 85 | 50 | 0 | 0 | A | A |
| 24 | 70 | 85 | 75 | 50 | 0 | 0 | A | A |
| 25 | 80 | 100 | 85 | 70 | 0 | 50 | A | A |
| 26 | 90 | 100 | 90 | 0 | 60 | 50 | A | A |
| 27 | 90 | 100 | 100 | 0 | 50 | 50 | A | A |
| 28 | 80 | 100 | 100 | 0 | 70 | 50 | A | A |

## Claims

1. An article comprising a substrate and a copolymer disposed on at least a portion of the substrate wherein the copolymer comprises
a) 50 to 95 weight percent first polymerized units comprising at least one of:
a1) 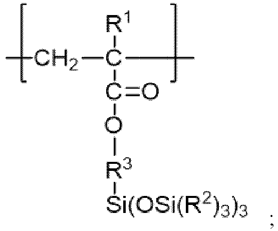 or
a2) 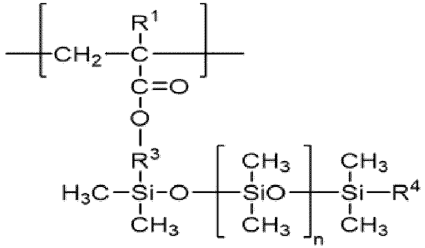
wherein:
each R¹ is independently H or methyl;
each R² is independently methyl or ethyl;
each R³ is independently methylene, ethylene, or propylene;
each R⁴ is independently methyl, ethyl, propyl, or butyl;
each n is independently an integer from 2 to 10; and
b) 5 to 50 weight percent of polymerized unit represented by 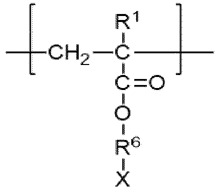 wherein:
each R⁶ is independently methylene, ethylene, or propylene; and
X is an epoxy group; and
c) up to 20 weight percent of other comonomers.

2. The article of claim 1 wherein the copolymer is non-fluorinated.

3. The article of claims 1-2 wherein R¹ is methyl.

4. The article of claims 1-3 wherein R² is methyl.

5. The article of claims 1-4 wherein R³ is propylene.

6. The article of claims 1-5 wherein R⁴ is methyl.

7. The article of claims 1-6 further comprising third polymerized units represented by 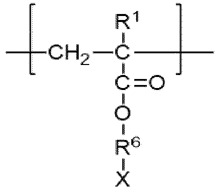 wherein:
each R⁶ is independently methylene, ethylene, or propylene; and
X is hydroxy.

8. The article of claims 1-7 wherein the copolymer has one or more of the following properties
i) an initial water repellency of fabric of at least 70, 80, 90, or 100 according to AATCC TM 22-2017e;
ii) a water repellency of fabric after washing and drying of at least 50, 60, 70, 80, 90, or 100; and
iii) an initial oil repellency with mineral or olive oil of A or B according to AATCC TM118-2013e2.

9. The articles of claim 1-8 wherein the substrate comprises a porous surface including paper, woven and nonwoven fabrics, natural and synthetic leather or suede; and hard surface including concrete and natural and synthetic wood and stone.

10. A copolymer comprising:
a) 50 to 95 weight percent first polymerized unit comprising at least one of:
a1) 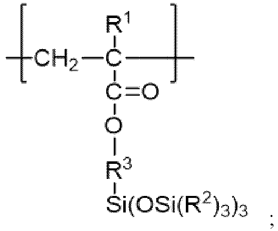 or
a2) 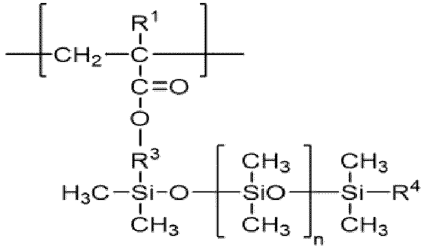
wherein:
each R¹ is independently H or methyl;
each R² is independently methyl or ethyl;
each R³ is independently methylene, ethylene, or propylene;
each R⁴ is independently methyl, ethyl, propyl, or butyl;
each n is independently an integer from 2 to 10; and
b) 5 to 50 weight percent second polymerized unit represented by 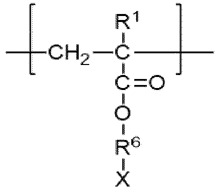 wherein:
each R⁶ is independently methylene, ethylene, or propylene; and
X is an epoxy group; and
c) up to 25 wt.% of other comonomers.

11. A copolymer comprising:
a) 50 to 95 weight percent of first polymerized unit comprising at least one of:
a1) 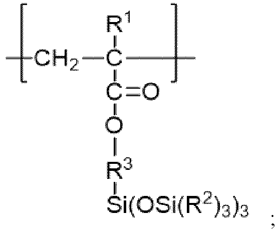 or
a2) 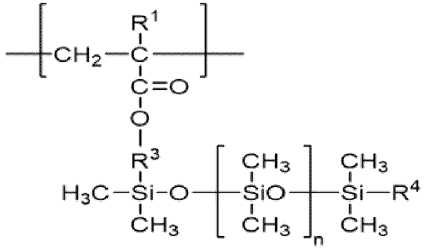
wherein:
each R¹ is independently H or methyl;
each R² is independently methyl or ethyl;
each R³ is independently methylene, ethylene, or propylene;
each R⁴ is independently methyl, ethyl, propyl, or butyl;
each n is independently an integer from 2 to 65; and
b) 5 to 50 weight percent of second polymerized unit represented by 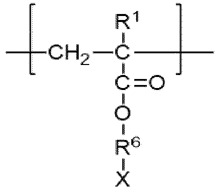 wherein:
each R⁶ is independently methylene, ethylene, or propylene; and
X is independently a functional group selected from epoxy, hydroxyl, or isocyanate group; and
c) 0 to 10 wt.% of other comonomers.

12. The copolymer of 11 further **characterized by** claims 2-7.

13. An article comprising a substrate and a copolymer according to claims 11-12 disposed on at least a portion of the substrate.

14. The article of claim 13 further **characterized by** claims 8-9.

15. A method of making an article comprising:
applying a water-based dispersion comprising the copolymer of claims 9-12 to a substrate; and
removing the water from the dispersion.
